# FASCICULE DE BREVET EUROPEEN

(11) **EP 1 096 220 B1**
(45) Date de publication et mention de la délivrance du brevet: **21.06.2006**
(21) Numéro de dépôt: 99121712.6
(22) Date de dépôt: 30.10.1999
(51) Int. Cl.: G01B 5/012

(54) **Machine de mesure coordonnées avec palpeur**
Koordinatenmessgerät mit Taststift
Coordinate measuring machine with touch probe

(43) Date de publication de la demande: 02.05.2001
(73) Titulaire: SCHNYDER & CIE. S.A., CH-2735 Bévilard (CH)
(72) Inventeur: Wüst, Robert M., 2822 Courroux (CH); Schnyder, Jacques M., 2735 Bévilard (CH)
(74) Mandataire: Gresset, Jean

(56) Documents cités:
- US-A- 4 276 696
- US-A- 5 072 522
- US-A- 5 291 662

## Description

La présente invention se rapporte aux appareils de mesure munis d'un palpeur. Elle concerne plus particulièrement les appareils comportant un chariot coulissant et un porte-palpeur, fixé au chariot et sur lequel est monté le palpeur.

Dans l'appareil selon l'invention, le porte-palpeur comprend une barre de métal à section polygonale avec au moins deux faces planes, et un support fixé à l'une des extrémités de la barre et sur lequel est fixé le palpeur, l'autre extrémité de la barre étant montée sur le chariot.

Un appareil de ce type est décrit dans le brevet US 5,072,522. Cet appareil comprend un socle et une colonne solidaire du socle. Un chariot est monté coulissant sur la colonne et relié à un contrepoids, de manière qu'il reste dans n'importe quelle position comprise entre les deux extrémités de la colonne. Un palpeur est monté sur un porte-palpeur, lui-même fixé sur le chariot. Ce document ne décrit ni ne montre les moyens de fixation du porte-palpeur sur le chariot.

Le document GB 2 039 673 présente un appareil tout à fait comparable. Le porte-palpeur est, dans ce cas, rendu solidaire du chariot par une pièce en U et une vis à molette serrée dans le chariot. Une telle solution permet, certes, d'assurer une liaison rigide du porte-palpeur sur son support, mais son remplacement par un autre pose problème, car la position du porte-palpeur mis en place ne peut être garantie. Il est, ainsi, indispensable de commencer par l'orienter approximativement, puis de réétalonner l'appareil avant de pouvoir effectuer une nouvelle mesure. De plus, le couple de serrage peut considérablement varier d'un personne à l'autre, de sorte que la rigidité de l'assemblage peut être problématique. Une telle solution ne donne donc pas satisfaction si l'on veut pouvoir effectuer des mesures successives avec plusieurs portes-palpeur, sans devoir effectuer de long réglages.

La présente invention a pour but principal de permettre une mise en place rapide et précise d'un porte-palpeur sur un tel appareil.

Ce but est atteint grâce au fait que le chariot du dispositif selon l'invention est muni d'une coulisse, de section dans laquelle s'inscrit la section de la barre, qui comporte une première extrémité dans laquelle la barre est engagée et munie de deux appuis disposés longitudinalement sur l'un des côtés de la coulisse, un à chacune de ses extrémités, et destinés à être en contact avec l'une des faces de la barre, et un organe de verrouillage formé d'un verrou, coopérant avec l'autre face, et d'un ressort, générant une force de blocage qui applique le verrou contre la barre, la force étant orientée selon un axe passant entre les deux appuis.

De manière avantageuse, la barre est de section rectangulaire dont les côtés ont un rapport compris entre 1/3 à 1/5.

Dans un mode de réalisation particulièrement simple et efficace, le verrou est formé d'une tige cylindrique munie d'un plat parallèle à l'axe du cylindre et qui prend appui sur le porte-palpeur par l'une des arêtes définissant la transition entre le plat et la partie cylindrique de la tige. Le ressort est de type à boudin, avec deux extrémités, l'une étant fixée au chariot. L'organe de verrouillage comporte, en outre, un levier, solidaire de la tige en son point de pivotement et qui coopère avec l'autre extrémité du ressort, pour engendrer la force de blocage.

Afin de simplifier le déverrouillage du porte-palpeur, la colonne est munie d'un butoir contre laquelle le levier vient prendre appui en fin de course, de manière à engendrer une force opposée à la force de verrouillage.

Pour faciliter le positionnement du porte-palpeur, la coulisse est obturée par une butée à son extrémité opposée à celle dans laquelle le porte-palpeur est engagé.

De manière avantageuse, l'appareil comporte une colonne, sur laquelle le chariot monté coulissant, et un contrepoids, également monté coulissant sur la colonne et relié au chariot, pour les équilibrer. Une telle construction permet de placer le palpeur dans n'importe quelle position, il y reste grâce au contrepoids. Toutefois, lorsque au cours d'une mesure, le porte-palpeur doit être changé, l'équilibre du chariot et du contrepoids peut être détruit. Pour pallier cette difficulté, le porte-palpeur peut comporter des découpes qui l'allègent. Il est, de la sorte, possible d'utiliser des portes-palpeur de différents types, sans devoir effectuer des réglages particuliers.

Dans un mode de réalisation particulièrement intéressant, appareil de mesure comporte, en outre, une électronique de mesure, un socle, une colonne solidaire du socle, sur laquelle le chariot est monté coulissant. Dans ce mode de réalisation:
- la colonne porte une échelle de mesure,
- le chariot est muni d'un lecteur coopérant avec l'échelle et relié à l'électronique de mesure, et
- le palpeur, mobile selon un axe parallèle à la direction d'engagement de la barre dans la coulisse, est muni de moyens de mesure à commande électrique, également reliés à ladite électronique.

L'amplitude du déplacement d'un palpeur tel que défini ci-dessus est malheureusement très limitée. C'est pourquoi, pour permettre une mesure du même ordre de grandeur que le permet le déplacement du chariot, dans un mode de réalisation particulier, l'appareil comporte, en outre, une règle, orientée parallèlement à l'axe de mobilité du palpeur, et une tête de lecture munie de moyens de mesure à commande électrique et coopérant avec la règle, l'un solidaire du socle, l'autre du support. Dans cet appareil, les moyens de mesure associés au palpeur et à la tête sont reliés à l'électronique de mesure qui est agencée de manière à additionner les valeurs mesurées, donnant ainsi la valeur de la cote mesurée selon un axe perpendiculaire au déplacement du chariot et parallèle à la direction de mobilité du palpeur.

D'autres avantages et caractéristiques de l'invention ressortiront de la description qui va suivre, faite en regard du dessin annexé, dans lequel:
La figure 1 montre, en perspective, un appareil de mesure selon un premier mode de réalisation de l'invention;
La figure 2 représente une vue agrandie d'une partie de l'appareil de la figure 1, montré de face en a et coupé selon la ligne B-B en b;
La figure 3 permet de voir différents modes d'exécution de portes-palpeur susceptibles d'être utilisés dans l'appareil selon l'invention, et
La figure 4 illustre un appareil selon un second mode de réalisation, permettant d'effectuer des mesures selon deux axes.

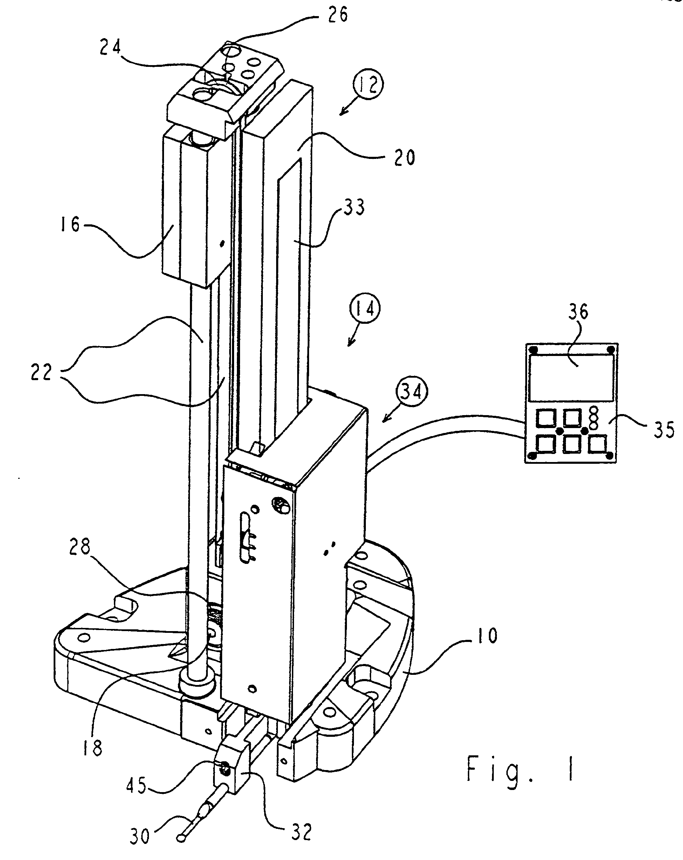

L'appareil de mesure de la figure 1 comporte essentiellement un socle 10, une colonne 12, fixée sur le socle 10, un chariot 14, un contrepoids 16 et un moteur 18.

La colonne 12 comprend un pilier 20, de forme générale rectangulaire et deux tiges 22, sur lesquels coulissent respectivement le chariot 14 et le contrepoids 16. Ces derniers sont reliés l'un à l'autre au moyen d'une courroie 24 formant une boucle qui passe sur une première poulie 26 disposée au sommet de la colonne 12 et sur une seconde poulie 28 disposée à sa base et entraînée par le moteur 18.

Pour effectuer des mesures, l'appareil est muni d'un palpeur 30 monté sur un porte-palpeur 32, lui-même fixé au chariot 14, par des moyens qui seront précisés plus loin.

De manière classique, l'appareil de mesure comporte une échelle de mesure 33 collée sur le pilier 20 et un lecteur 34 solidaire du chariot 14, ainsi qu'une électronique de mesure, schématiquement représentée en 35. Cette dernière est reliée au moteur 28 et au lecteur 34, assurant ainsi la lecture de la position du chariot, son entraînement et son arrêt, de manière que la pression de contact de mesure soit constante. Les informations sont rendues accessibles au moyen d'un affichage 36.

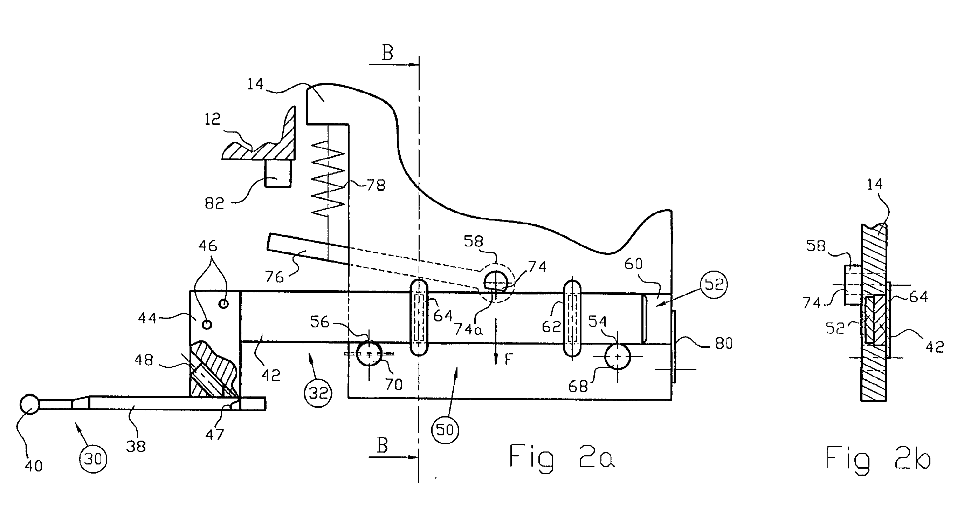

Comme on peut le voir plus particulièrement sur la figure 2, le palpeur 30 est formé d'une tige cylindrique en acier trempé rectifié 38, dont l'une des extrémités porte une sphère en rubis 40. Le porte-palpeur 32 comprend une barre 42 parallélépipédique en acier inoxydable et un support 44 en acier noirci, fixé à la barre 42 par des goupilles 46 et comportant une gorge 47 dans laquelle est logé le palpeur 30. Une vis 48, montée dans un trou taraudé pratiqué dans le support 44 et débouchant dans la gorge 47, permet de bloquer le palpeur 30 sur le porte-palpeur 32.

La barre 42 est de section rectangulaire ayant un rapport entre les côtés compris entre 1/3 et 1/5. Typiquement, et pour un appareil ayant une amplitude de mesure de 60 cm, la barre a une largeur de 12 mm et une épaisseur de 3 mm.

Le porte-palpeur 32 muni du palpeur 30 forment ensemble un outil fixé au chariot 14 par l'intermédiaire d'un dispositif de fixation 50 formé d'une coulisse 52, de deux appuis 54 et 56 et d'un organe de blocage 58.

La coulisse 52 est formée par une gorge 60 pratiquée dans le corps du chariot 14, dont la profondeur et la largeur sont respectivement légèrement supérieures à l'épaisseur et à la largeur de la barre 42, pour que celle-ci puisse y être engagée librement, et de deux plaquettes 62 et 64, fixées sur le chariot 14, par exemple au moyen de vis non représentées au dessin, et s'étendant par dessus la gorge 60, de manière à empêcher un dégagement latéral de la barre 42.

Le chariot 14 comporte deux trous percés dans son épaisseur et qui débordent dans la gorge 60, sur l'un de ses côtés. Dans le premier est engagé une goupille 68 en acier trempé, fixée par chassage. Dans le deuxième se trouve un excentrique 70 muni de moyens pour le tourner et pour le bloquer, qui n'ont pas été représentés au dessin pour en faciliter la lecture. La goupille 68 et l'excentrique 70 forment respectivement les appuis 54 et 56 du dispositif de fixation. L'excentrique permet de régler l'alignement du porte-palpeur 42 par rapport à la base du socle 10, de manière qu'ils soient parallèles entre eux.

Le chariot comporte un troisième trou, également percé dans son épaisseur et qui déborde dans la gorge 60 sur l'autre de ses côtés, dans lequel pivote l'organe de blocage 58, formé d'une tige cylindrique 74 munie d'un plat 74a, d'un levier 76 et d'un ressort à boudin 78. Lorsque le plat 74a est disposé parallèlement aux côtés de la gorge 60, la distance comprise entre ce plat et une droite tangente aux deux appuis 54 et 56 est légèrement supérieure à la largeur de la barre 42, de manière que celle-ci puisse être glissée dans la coulisse 52.

Le levier 76 est vissé sur la tige 74 de sorte qu'ils soient solidaires l'un de l'autre et que le plat 74a soit tourné vers la gorge 60. Le ressort 78 est fixé par l'une de ses extrémités au chariot 14 et par l'autre au levier 76. Il exerce ainsi un couple faisant tourner la tige 74 dans son trou, jusqu'à ce qu'elle prenne appui par l'une des extrémités de la surface plane 74a sur l'un des côtés de la barre 42. Il en résulte une force F appliquée sur la barre 42 et orientée selon un axe passant entre les deux appuis 54 et 56. De manière typique, cette force peut être de l'ordre de 10 à 20 N. A cet effet, le ressort doit exercer une force de 1 N lorsque le rapport entre le diamètre de la tige 74 et le point d'attache du ressort 78 sur le levier 76 est égal à 1/10.

La coulisse est fermée au moyen d'une butée 80 à son extrémité opposée à celle dans laquelle la barre 42 est engagée. Cette butée 80 est fixée au chariot 14 par des moyens classiques, par exemple au moyen de vis non représentées au dessin.

Pour assurer la mise en place et le retrait du porte-palpeur 32 sur le chariot 14, il suffit de faire pivoter le levier 76, de manière que le plat 74a soit sensiblement parallèle au côté de la barre 42. Cela peut se faire en appuyant directement sur le levier 76. Dans ce cas, le levier 76 doit déborder du boîtier de l'appareil de mesure, ce qui peut poser quelques problèmes dans certaines conditions.

Dans la structure représentée à la figure 2, le déverrouillage se fait en montant le chariot au sommet de la colonne 12. Cette dernière porte une goupille 82 formant buttoir, contre laquelle le levier 76 vient s'appuyer, ce qui provoque son basculement et, par là, le déverrouillage de la barre 42.

Un tel dispositif de fixation est très facile à manier, de sorte que l'outil que forment ensemble le porte-palpeur et le palpeur qui lui est associé, peut facilement être remplacé par un autre. Il est ainsi possible d'accéder à tous les points à mesurer sur une pièce ou un appareil, avec un minimum de manipulations.

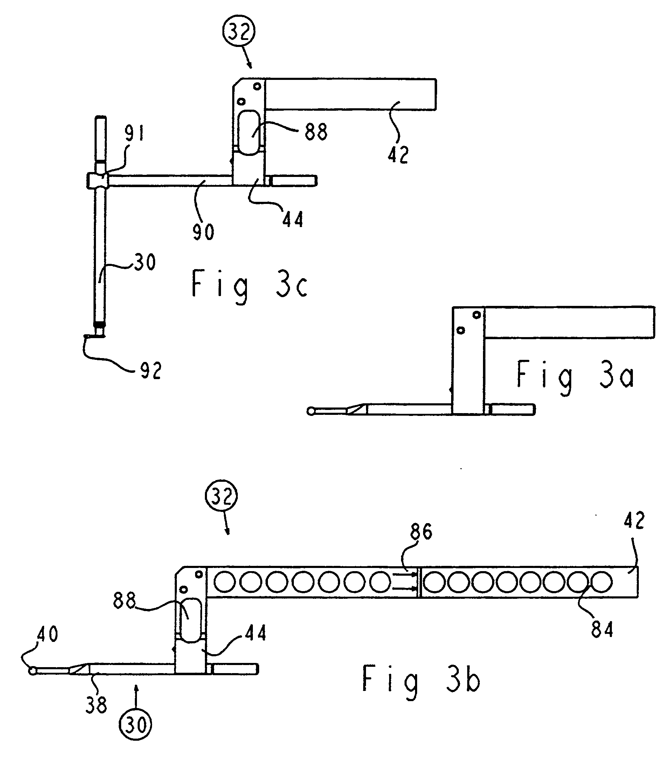

La figure 3 montre, dans ses vues a à c, différents outils formés de portes-palpeur et de palpeurs associés, permettant des mesures dans des conditions plus ou moins particulières:
a) Outil court permettant des mesures dans des conditions normales;
b) Outil dans lequel le porte-palpeur comporte une longue barre mesurer des points éloignés de la colonne;
c) Outil pour effectuer des mesures à l'intérieur de creusures.

L'outil représenté à la figure 3a a déjà été décrit en référence à la figure 2. Il a été montré pour permettre une comparaison avec les autres.

La figure 3b permet de voir un outil qui comprend une barre 42 près de trois fois plus longue que celle de la figure 3a, et munie de trous ronds 84, d'allégement. Elle porte une marque 86 dont la fonction sera précisée plus loin. Le support 44 comprend une découpe 88 dans sa partie centrale. Les trous 84 et la découpe 88 allègent considérablement l'outil, sans pour autant en affecter la rigidité. Le poids de l'outil est, ainsi, pratiquement le même que celui représenté à la figure 3a. Il est ainsi possible d'éviter de corriger l'équilibrage à chaque fois que l'on change de porte-palpeur. Les essais effectués ont montré qu'avec un rapport compris entre 1/3 et 1/5, typiquement de 1 à 4 entre la hauteur et l'épaisseur de la barre 42, il est possible de réaliser des outils rigides et performants, ayant des poids suffisamment proches les uns des autres pour que l'équilibrage du chariot et du contrepoids ne doive pas être modifié.

La marque 86 permet de vérifier que la barre est en position correcte, c'est-à-dire en appui contre la butée 80. Il suffit à cet effet à l'opérateur de s'assurer que cette marque se trouve alignée sur le bord du boîtier protégeant l'appareil.

L'outil de la figure 3c comporte un porte-palpeur 32 muni d'une tige horizontale 90 dont une extrémité est fixée au support 44 alors que l'autre est munie d'un manchon 91 dans lequel le palpeur 30 est engagé et fixé par une vis non représentée. L'extrémité inférieure du palpeur 30 porte un doigt mince 92, disposé parallèlement à la barre 42 et qui permet d'effectuer des mesures dans des gorges ou des creusures.

Le support 44 est muni d'une découpe 88, comme l'outil de la figure 3b. Cette découpe suffit pour obtenir un poids équivalent aux outils des figures 3a et 3b.

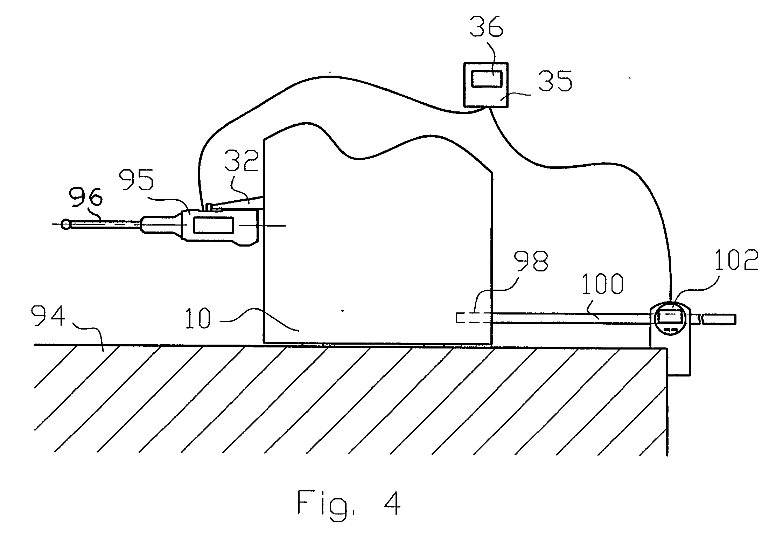

L'appareil décrit en référence à la figure 1 permet de mesurer des cotes selon un axe uniquement, vertical. Pour certaines applications, il peut être agréable de pouvoir effectuer une mesure selon un deuxième axe, horizontal. L'appareil partiellement représenté sur la figure 4 permet une telle mesure. Le socle 10 de l'appareil est disposé sur une table 94. Il est équipé d'un outil formé d'un porte-palpeur 32 et d'un palpeur 95, d'un type comportant des moyens de mesure associés comme, par exemple, les palpeurs vendus sous la marque Sylvac (Suisse), référence 930.2146. Le palpeur 95 comporte une tige cylindrique 96, mobile selon son axe, avec une amplitude de 10 mm environ.

Le socle 10 porte une encoche 98. L'appareil comporte, en outre, un appareil de mesure complémentaire formé d'une règle 100 et d'une tête de lecture 102, par exemple de type inductif, dans laquelle la règle 100 est montée coulissante. Cette règle est de type classique, avec une échelle millimétrique, non représentée au dessin et disposée en regard de la tête de lecture 102. Elle est fixée rigidement au socle 10 dans son encoche 98.

Le palpeur 95 et la tête de lecture 102 sont reliés à l'électronique de mesure 35, qui comporte des moyens permettant d'effectuer une addition, pour faire la somme des cotes mesurées par eux.

Malgré le fait que le palpeur 95 comporte des moyens de mesure qui lui sont propres, le poids de l'outil reste tout à fait acceptable et peut être ajusté par les trous 84 pratiqués dans la barre 42 et par la découpe 88 du support 44, de manière à ce que l'équilibre du chariot ne soit pas affectée.

Pour effectuer une mesure selon un axe horizontal, au moyen de l'appareil de la figure 4, il suffit de faire glisser le socle 10 sur la table, jusqu'à ce que le palpeur 95 entre en contact avec l'objet à mesurer. Du fait que le palpeur 95 comporte une tige 96 rétractable, le déplacement du socle 10 peut se faire de manière très approximative, avec une précision correspondant à l'amplitude de mesure du palpeur 95, l'électronique 35 calculant ensuite la cote exacte, égale à la somme des cotes mesurées par le palpeur 95 et la tête de lecture 102.

Ainsi, grâce au fait que l'appareil est muni d'un porte-palpeur particulier, avec un chariot qui lui est adapté, il est possible de considérablement améliorer son fonctionnement, de simplifier sa manipulation et d'augmenter les possibilités de mesure, cela sans augmentation sensible du prix de revient de l'appareil.

## Revendications

1. Appareil de mesure muni d'un palpeur(30), comportant une colonne (12), un chariot (14) monté coulissant sur la colonne (12) et un porte-palpeur (32), fixé au chariot (14) et sur lequel est monté le palpeur (30), dans lequel le porte-palpeur (32) comprend une barre de métal (42) avec au moins deux faces planes et un support (44), fixé à l'une des extrémités de la barre (42) et sur lequel est fixé le palpeur (32), l'autre extrémité de la barre étant montée sur le chariot (14),
**caractérisé en ce que** le chariot (14) est muni d'une coulisse (52), de section dans laquelle s'inscrit la section de la barre (42), qui comporte deux extrémités dont l'une dans laquelle barre est engagée et qui est munie de deux appuis (54, 56) disposés longitudinalement sur l'un des côtés de la coulisse (52), un à chacune de ses extrémités, et destinés à être en contact avec l'une des faces de la barre (42), et un organe de verrouillage (58) formé d'un verrou (74), coopérant avec l'autre face, et d'un ressort (78), générant une force (F) de blocage qui applique le verrou (74) contre la barre (42), la force (F) étant orientée selon un axe passant entre les deux appuis (54, 56).

2. Appareil selon la revendication 1, **caractérisé en ce que** la barre (42) est de section rectangulaire dont les côtés ont un rapport compris entre 1/3 à 1/5.

3. Appareil selon l'une des revendications 1 et 2, **caractérisé en ce que**:
- le verrou est formé d'une tige (74) cylindrique munie d'un plat (74a) parallèle à l'axe du cylindre et qui prend appui sur le porte-palpeur (32) par l'une des arêtes définissant la transition entre le plat et la partie cylindrique de la tige,
- le ressort (78) est de type à boudin, avec deux extrémités, l'une étant fixé au chariot (14),
- l'organe de verrouillage (58) comporte, en outre, un levier (76) solidaire de la tige (74) en son point de pivotement et qui coopère avec l'autre extrémité du ressort (78), pour engendrer la force (F) de blocage.

4. Appareil selon la revendication 3, **caractérisé en ce que** la colonne (12) est munie d'un butoir (82) contre laquelle le levier (76) vient prendre appui en fin de course, de manière à engendrer une force opposée à la force (F) de verrouillage.

5. Appareil selon l'une des revendications 1 à 4, **caractérisé en ce que** la coulisse (52) est obturée par une butée (80) à son extrémité opposée à celle dans laquelle la barre 42) est engagée.

6. Appareil selon l'une des revendications 1 à 5, **caractérisé en ce qu'**il comporte, en outre, un contrepoids (16) également monté coulissant sur la colonne (12) et relié au chariot (14), et **en ce que** le porte-palpeur (32) comporte des découpes (84, 88) pour l'alléger, de manière qu'il soit possible d'utiliser des portes-palpeur de différents type, sans devoir effectuer des réglages d'équilibre entre le chariot (14) muni des différents portes-palpeur et le contrepoids (16).

7. Appareil selon la revendication 6, **caractérisé en ce qu'**il comporte, en outre, une électronique (35) de mesure, un socle (10) portant ladite colonne (12), et **en ce que**
- la colonne (12) porte une échelle de mesure (33),
- le chariot (14) est muni d'un lecteur (34) coopérant avec ladite échelle et relié à l'électronique de mesure (35), et
- le palpeur (95), muni d'une tige (96) mobile selon un axe perpendiculaire à l'axe de déplacement du chariot (14), est muni de moyens de mesure à commande électrique, également reliés à ladite électronique (35).

8. Appareil selon la revendication 7, **caractérisé en ce qu'**il est disposé sur un support (94) et **en ce qu'**il comporte, en outre, une règle (100), orientée parallèlement à l'axe de mobilité de la tige (96) du palpeur (95), et une tête de lecture (102) munie de moyens de mesure à commande électrique et coopérant avec la règle (100), l'un solidaire du socle (10), l'autre du support (94), dans lequel les moyens de mesure associés audit palpeur (95) et à la tête (102) sont reliés à l'électronique de mesure (35) qui est agencée de manière à additionner les valeurs mesurées, donnant ainsi la valeur de la cote mesurée selon un axe perpendiculaire au déplacement du chariot et parallèle à la direction de mobilité du palpeur.

## Claims

1. Measuring apparatus provided with a stylus (30), including a column (12), a carriage (14) slidably mounted on the column (12) and a stylus carrier (32), secured to the carriage (14) and on which the stylus (30) is mounted, wherein the stylus carrier (32) includes a metal bar (42) with at least two plane faces and a support (44), secured to one of the ends of the bar (42) and on which the stylus (32) is secured, the other end of the bar being mounted on the carriage (14),
**characterised in that** the carriage (14) is provided with a slide (52) with a cross section in which the cross section of the bar (42) fits, which includes two ends in one of which the bar is engaged and which is provided with two supports (54, 56) arranged longitudinally on one of the sides of the slide (52), one at each of its ends, and intended to be in contact with one of the faces of the bar (42), and a locking member (58) formed of a lock (74), cooperating with the other face, and a spring (78), generating a blocking force (F) which applies the lock (74) against the bar (42), the force (F) being oriented along an axis passing between the two supports (54, 56).

2. Apparatus according to claim 1, **characterised in that** the bar (42) has a rectangular cross section the sides of which have a ratio comprised between 1/3 and 1/5.

3. Apparatus according to any claims 1 and 2, **characterised in that**:
- the lock is formed of a cylindrical rod (74) provided with a flat side (74a) parallel to the axis of the cylinder and which rests on the stylus carrier (32) via one of the edges defining the transition between the flat side and the cylindrical portion of the rod,
- the spring (78) is of the helical type, with two ends, one being secured to the carriage (14),
- the locking member (58) further includes a lever (76) secured to the rod (74) at its pivoting point and which cooperates with the other end of the spring (78), to generate the blocking force (F).

4. Apparatus according to claim 3, **characterised in that** the column (12) is provided with a stop block (82) against which the lever (76) abuts at the end of its travel, so as to generate an opposite force to the locking force (F).

5. Apparatus according to any of claims 1 to 4, **characterised in that** the slide (52) is closed by a stop (80) at the end thereof opposite to that in which the bar (42) is engaged.

6. Apparatus according to any of claims 1 to 5, **characterised in that** it further includes, a counterbalance weight (16) also slidably mounted on the column (12) and connected to the carriage (14), and **in that** the stylus carrier (32) includes cut out portions (84, 88) to lighten it, so that it is possible to use stylus carriers of different types, without having to effect balance adjustments between the carriage (14) fitted with different stylus carriers and the counterbalance weight (16).

7. Apparatus according to claim 6, **characterised in that** it further includes an electronic measuring arrangement (35), a base (10) carrying said column (12) and **in that**
- the column (12) carries a measuring scale (33),
- the carriage (14) is provided with a reader (34) cooperating with said scale and connected to the electronic measuring arrangement (35), and
- the stylus (95), provided with a rod (96) movable along an axis perpendicular to the axis of movement of the carriage (14), is provided with electrically controlled measuring means, which are also connected to said electronic arrangement (35).

8. Apparatus according to claim 7, **characterised in that** it is arranged on a support (94) and **in that** it further includes a ruler (100) oriented parallel to the axis of mobility of the rod (96) of the stylus (95), and a reader head (102) provided with electrically controlled measuring means and cooperating with the ruler (100), one secured to the base (10), the other to the support (94), wherein the measuring means associated with said stylus (95) and with the reader head (102) are connected to the electronic measuring arrangement (35) which is arranged to add the measured values, thus giving the value of the dimension measured along an axis perpendicular to the movement of the carriage and parallel to the direction of mobility of the stylus.

## Patentansprüche

1. Mit einem Taststift (30) versehene Messvorrichtung, welche
- einen Ständer (12),
- einen an dem Ständer (12) gleitend verschiebbaren Schlitten (14) und
- einen Taststifthalter (32) aufweist, der an dem Schlitten (14) befestigt ist und an dem der Taststift (30) angebracht ist,
- wobei der Taststifthalter (32) eine Stange (42) aus Metall mit mindestens zwei ebenen Flächen und einen Träger (44) aufweist, der an einem der Enden der Stange (42) festgelegt ist und an dem der Taststift (32) befestigt ist, während das andere Ende der Stange an dem Schlitten (14) angebracht ist,
**dadurch gekennzeichnet, dass** der Schlitten (14)
- mit einer Führungsrinne (52), die einen Querschnitt hat, in den der Querschnitt der Stange (42) hineinpasst, die zwei Enden aufweist, von denen das eine mit der Stange in Eingriff steht und die mit zwei Auflagern (54, 56) versehen ist, von denen jeweils eines in Längsrichtung auf einer der Seiten der Führungsrinne (52), an ihren Enden, angeordnet ist und die dazu bestimmt sind, mit einer der Flächen der Stange (42) in Kontakt zu stehen, und
- mit einer Verriegelungseinrichtung (58) versehen ist, die von einem Riegel (74), der mit der anderen Fläche zusammenwirkt, und von einer Feder (78) gebildet wird, die eine Sperrkraft (F) erzeugt, die den Riegel (74) gegen die Stange (42) drückt, wobei die Kraft (F) längs einer zwischen den beiden Auflagern (54, 56) hindurchgehenden Achse ausgerichtet ist.

2. Vorrichtung nach Anspruch 1, **dadurch gekennzeichnet, dass** die Stange (42) einen rechteckigen Querschnitt hat, deren Seiten ein Verhältnis zwischen 1:3 und 1:5 haben.

3. Vorrichtung nach einem der Ansprüche 1 und 2, **dadurch gekennzeichnet,**
- **dass** der Riegel von einem zylindrischen Stift (74) gebildet wird, der mit einer zur Achse des Zylinders parallelen Fläche (74a) versehen ist, die an dem Taststifthalter (32) mit einer der Kanten anliegt, die den Übergang zwischen der Fläche und dem zylindrischen Teil des Stifts bilden,
- **dass** die Feder (78) eine Schraubenfeder mit zwei Enden ist, wobei ein Ende an dem Schlitten (14) befestigt ist, und
- **dass** die Verriegelungseinrichtung (58) außerdem einen Hebel (76) aufweist, der mit dem Stift (74) an seinem Schwenkpunkt fest verbunden ist und der mit dem anderen Ende der Feder (78) zusammenwirkt, um die Sperrkraft (F) zu erzeugen.

4. Vorrichtung nach Anspruch 3, **dadurch gekennzeichnet, dass** der Ständer (12) mit einem Anschlag (82) versehen ist, an dem der Hebel (76) am Ende des Weges so zum Anliegen kommt, dass eine zu der Sperrkraft (F) entgegengesetzte Kraft erzeugt wird.

5. Vorrichtung nach einem der Ansprüche 1 bis 4, **dadurch gekennzeichnet, dass** die Führungsrinne (52) durch eine Anschlagfläche (80) an dem Ende versperrt wird, das dem Ende gegenüberliegt, mit dem die Stange (42) in Eingriff steht.

6. Vorrichtung nach einem der Ansprüche 1 bis 5, **dadurch gekennzeichnet, dass** sie außerdem ein Gegengewicht (16) aufweist, das ebenfalls gleitend verschiebbar auf dem Ständer (12) angebracht und mit dem Schlitten (14) verbunden ist, und dass der Taststifthalter (32) Ausschnitte (84, 88) aufweist, um ihn leichter zu machen, so dass es möglich ist, Taststifthalter verschiedener Bauweisen zu verwenden, ohne Gleichgewichtseinstellungen zwischen dem mit verschiedenen Taststifthaltern versehenen Schlitten (14) und dem Gegengewicht (16) vornehmen zu müssen.

7. Vorrichtung nach Anspruch 6, **dadurch gekennzeichnet, dass** sie außerdem eine Messelektronik (35) und einen den Ständer (12) tragenden Fuß (10) aufweist und
- dass der Ständer (12) eine Maßeinteilung (33) aufweist,
- dass der Schlitten (14) mit einem Lesegerät (34) versehen ist, das mit der Maßeinteilung zusammenwirkt und mit der Messelektronik (35) verbunden ist, und
- dass der Taststift (95), der mit einem Stift (96) versehen ist, der längs einer zur Verschiebungsachse des Schlittens (14) senkrechten Achse bewegbar ist, mit elektrisch steuerbaren Messeinrichtungen versehen ist, die ebenfalls mit der Elektronik (35) verbunden sind.

8. Vorrichtung nach Anspruch 7, **dadurch gekennzeichnet, dass** sie auf einer Auflage (94) angeordnet ist und dass sie außerdem ein Lineal (100), das parallel zur Bewegungsachse des Stifts (96) des Taststifts (95) ausgerichtet ist, und einen Lesekopf (102) aufweist, der mit elektrisch steuerbaren und mit dem Lineal (100) zusammenwirkenden Messeinrichtungen versehen ist, von denen eine mit dem Fuß (10) und die andere mit dem Träger (94) fest verbunden ist, wobei die dem Taststift (95) und dem Kopf (102) zugeordneten Messeinrichtungen mit der Messelektronik (35) verbunden sind, die so ausgelegt ist, dass sie die gemessenen Werte addiert und so den Wert des gemessenen Standes gemäß einer zur Verschiebung des Schlittens senkrechten und zur Bewegungsrichtung des Taststifts parallelen Achse angibt.
